# EUROPÄISCHE PATENTANMELDUNG

(11) **EP 1 297 878 A2**
(43) Veröffentlichungstag der Anmeldung: **02.04.2003**
(21) Anmeldenummer: 02021157.9
(22) Anmeldetag: 24.09.2002
(51) Int. Cl.: B01D 39/12, B01D 39/20, B01D 39/16

(54) **Mehrlagiges Filterelement**

(30) Priorität: 27.09.2001 DE 10147760
(71) Anmelder: FILTERWERK MANN & HUMMEL GMBH, 71638 Ludwigsburg (DE)
(72) Erfinder: Wolf, Michael, 66539 Neunkirchen (DE); Thalmann, Christian, 67346 Speyer (DE); Staudenmayer, Bernhard, 67373 Dudenhofen (DE); Stinzendörfer, Joachim, 67346 Speyer (DE)
(74) Vertreter: Voth, Gerhard, Dipl.-Ing.

(57) **Zusammenfassung**

Die Erfindung betrifft ein mehrlagiges Filterelement mit einem an einem Trägermedium (2;3;4;7) gehaltenen Filtermedium (1;5;6;8), bei dem das Filtermedium ein metallisches Vlies (1), Gewebe (5) oder eine Schlitzfolie (6) ist und das Trägermedium ein metallisches Gewebe (4), Streckmetall (3) oder Lochblech (2) ist. das Filtermedium ein Kunststoffsinterpulver (8) ist und das Trägermedium ein metallisches Gewebe (4) oder Lochblech (2) ist. Weiterhin kann auch ein Kunststoffsinterpulver (8) als Filtermedium auf oder um ein Lochblech (2) oder ein Gewebe (4) als Trägermedium gesintert werden oder das Filtermedium kann aus Keramikmembranen bestehen, die auf einen Keramiksinterkörper aufgesintert sind.

## Beschreibung

### Stand der Technik

Die Erfindung betrifft ein mehrlagiges Filterelement für die Filtrierung von fluiden Medien nach dem Oberbegriff des Anspruchs 1.

Aus der DE 42 06 738 A1 ist ein Filterelement bekannt, bei dem eine Lage aus Filtermaterial auf einer Stützlage gehalten ist. Die Stützlage ist bei der bekannten Anordnung ein Stützgitter aus Kunststoff. Bei vielen Anwendungen ist jedoch eine relativ hohe Differenzdruckstabilität erforderlich, damit kein Flattern der Filtermedien, z.B. bei Rückspülungen auftritt. Auch ist eine gewisse Dauerstabilität der Filtermedien bei dynamischer Beanspruchung sowie eine gute Verstärkung bei besonders feinen Filtermedien oft notwendig.

Es ist weiterhin ein Filterelement beispielsweise aus der DE 94 03 868.6 U1 mit einer zick-zack-förmig gefalteten Filterbahn bekannt, bei dem die Filterbahn sternförmig zusammengelegt ist. Der dadurch gebildete Hohlzylinder wird radial von außen von der zu filternden Flüssigkeit angeströmt und die gefilterte Flüssigkeit wird zentral aus dem Filterelement herausgeleitet. Das Material der Filterbahn ist bei dem bekannten Filterelement Papier, Filz oder ein Kunststoffvlies, wobei diese Filterelemente als auswechselbarer Einsatz in ein entsprechendes stabiles Filtergehäuse eingefügt werden.

### Aufgabenstellung

Der Erfindung liegt die Aufgabe zugrunde, ein Filterelement der eingangs genannten Art so fortzubilden, dass auf einfache Weise ein stabiler Aufbau und eine große Lebensdauer des Filterelements erreicht werden kann.

### Vorteile der Erfindung

Das erfindungsgemäße Filterelement ist, insbesondere für die Anwendung als Flüssigkeitsfilter mit den Merkmalen des Kennzeichens des Anspruchs 1 dadurch vorteilhaft weitergebildet, dass bei einem mehrlagigen Filterelement mit einem an einem Trägermedium gehaltenen Filtermedium das Filtermedium in einer ersten Ausführungsform ein metallisches Vlies, Gewebe oder eine Schlitzfolie ist und das Trägermedium ein metallisches Gewebe oder Lochblech ist.

Bei dieser Ausführungsform kann als Filtermedium ein Edelstahlvlies oder ein Edelstahlgewebe auf einem Lochblech aufgelötet sein. Weiterhin kann dabei in vorteilhafter Weise das Filtermedium mit dem Trägermedium linien- oder punktweise verbunden sein. Durch diese Linien- oder Punktberührung, des dann im Prinzip wellig anliegenden Filtermediums, geht relativ wenig offene Filterfläche im Filterelement verloren, so dass die Filterwirkung insgesamt verbessert ist.

Gemäß einer speziellen Ausführungsform ist als Filtermedium ein Edelstahlvlies oder ein Edelstahlgewebe auf einem Edelstahllochblech gesintert oder ein Edelstahlvlies als Filtermedium mit einem Edelstahlgewebe ist auf einem Edelstahlgewebe als Trägermedium gesintert.

Weiterhin kann nach einer anderen Ausführungsform der Erfindung als Filtermedium eine Nickelschlitzfolie auf einer weiteren Nickelschlitzfolie, z.B. eine sogenannte Electroformingschlitzfolie als Trägermedium gesintert sein, wodurch insbesondere die Herstellung einer welligen Oberfläche auf einfache Weise ermöglicht werden kann. Hier ist es auch möglich, dass die Nickelschlitzfolie als Filtermedium auch auf ein Nickelgewebe als Trägermedium gesintert werden kann.

Nach einer weiteren Ausführungsform ist in vorteilhafter Weise das Filtermedium ein Kunststoffsinterpulver und das Trägermedium ist ein metallisches Gewebe oder Lochblech. Das Kunststoffsinterpulver als Filtermedium kann dabei auf einfache Weise auf oder um ein Lochblech oder ein Gewebe als Trägermedium gesintert sein.

Ebenfalls ist es noch möglich, dass das Filtermedium aus Keramikmembranen besteht, die auf einen Keramiksinterkörper aufgesintert werden.

Mit der erfindungsgemäßen Anordnung der Filter- und Trägermaterialien ist in vorteilhafter Weise erreicht, dass auch in einer längeren Betriebszeit des Filterelements eine hohe Differenzdruckstabilität auch bei hoher dynamischer Beanspruchung erhalten bleibt. Auch ist dadurch ein sog. Flattern der Filtermedien bei Rückspülungen weitgehend vermieden. Es ist weiterhin eine Verwendung sehr feiner Filtermedien möglich, da eine sehr gute Verstärkung durch die erfindungsgemäßen Trägermaterialien erreicht wird. Durch an sich bekannte Umform- oder Urformprozesse können die Verbundmaterialien des im übrigen auch mehrfach anordbaren Filter- und des Trägermediums zu vielfältigen Formen, wie z.B. Kerzenformen mit innenliegenden Filtermedium oder Siebtaschen, verarbeitet werden.

Das Abdichten der Filtermaterialien gegen äußere Anschlusselement ist ebenfalls vereinfacht, da unter der leicht zu verwirklichenden Voraussetzung, dass das Filtermedium gegen das Trägermaterial abdichtet, nur das Trägermedium gegen das Anschlusselement abgedichtet werden muss. Aufbaubar sind mit der Erfindung viele Arten von Filtern für Fluide aller Art, insbesondere Rückspulfilter für Flüssigkeiten oder auch Entfeuchter zur Schlammentfeuchtung mit einem Filterkuchenauswurf mittels Druckluft, die eine hohe dynamische Beanspruchung erfahren.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele des erfindungsgemäßen Filterelements werden anhand der Zeichnung erläutert. Es zeigen:
Figur 1 bis 3 eine Anordnung von Vlies als Filtermaterial auf verschiedenen Trägermedien,
Figur 4 und 5 eine Anordnung von Gewebe als Filtermaterial auf verschiedenen Trägermedien,
Figur 6 bis 9 eine Anordnung einer Schlitzfolie als Filtermaterial auf verschiedenen Trägermedien,
Figur 10 eine Anordnung von Sinterpulver als Filtermaterial auf einem Gewebe als Trägermedium,
Figur 11 eine Anordnung von Sinterpulver als Filtermaterial, das in ein Lochblech als Trägermedium eingebettet ist, und
Figur 12 eine Anordnung einer Schlitzfolie, welche mit einer Lötverbindung oder einer Klebeverbindung auf einem Lochblech angeordnet ist.

### Beschreibung der Ausführungsbeispiele

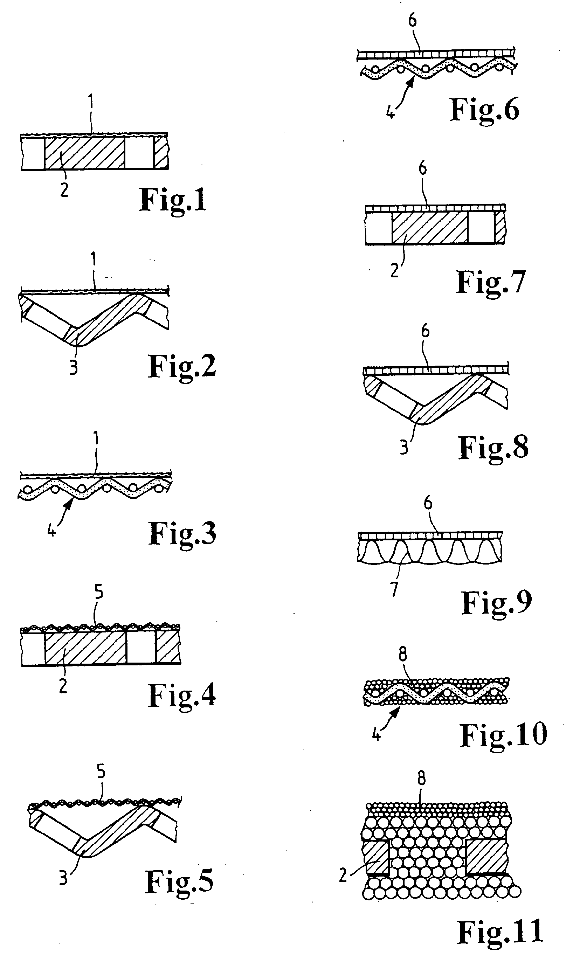

In Figur 1 ist ein Vlies 1 gezeigt, das z.B. mittels Schweißen, Löten, Versintern oder Kleben mit einem Trägermedium 2, hier ein Lochblech, verbunden ist. Aus Figur 2 ist eine Variante entnehmbar, bei der das Vlies 1 auf einem Streckmetall 3 mit linienförmiger Befestigung gehalten ist, beispielsweise durch Versinterung. Das Beispiel nach Figur 3 zeigt eine Verbindung des Vlieses 1 auf einem Gewebe 4, mit dem es ebenfalls z.B. durch Versinterung verbunden ist.

Aus Figur 4 ist eine Anordnung entnehmbar, die ein Gewebe 5 als Filtermedium zeigt, das z.B. mittels Schweißen, Löten, Versintern oder Kleben mit einem Trägermedium 2, hier ein Lochblech 2, verbunden ist. In Figur 5 ist ein Ausführungsbeispiel dargestellt, bei dem ein Gewebe 5 als Filtermedium auf einem Streckmetall 3 mit linienförmiger Befestigung gehalten ist, beispielsweise durch Versinterung.

Ein Ausführungsbeispiel nach Figur 6 stellt eine Verbindung einer Schlitzfolie 6 als Filtermedium auf einem Gewebe 4 dar, mit dem es ebenfalls z.B. durch Versinterung verbunden ist. Aus Figur 7 ist eine Anordnung entnehmbar, die eine Schlitzfolie 6 als Filtermedium zeigt, das z.B. mittels Schweißen, Löten, Versintern oder Kleben mit einem Trägermedium 2, hier ein Lochblech 2, verbunden ist. In Figur 8 ist ein Ausführungsbeispiel dargestellt, bei dem eine Schlitzfolie 6 als Filtermedium auf einem Streckmetall 3 mit linienförmiger Befestigung gehalten ist, beispielsweise auch durch Versinterung.

Eine Variante nach Figur 9 zeigt ein Ausführungsbeispiel, bei dem eine Schlitzfolie 6 ein auf eine Nickelschlitzfolie 7, z.B. eine sogenannte Electroformingschlitzfolie, als Trägermedium, aufgebracht bzw. aufgesintert ist.

Aus Figur 10 ist zu entnehmen, dass ein Sinterpulver 8 als Filtermedium auf ein Gewebe 4 aufgesintert ist und in Figur 11 ist ein Beispiel gezeigt, bei dem ein Lochblech 2 als Trägermedium in ein Sinterpulver 8 als Filtermedium eingesintert ist.

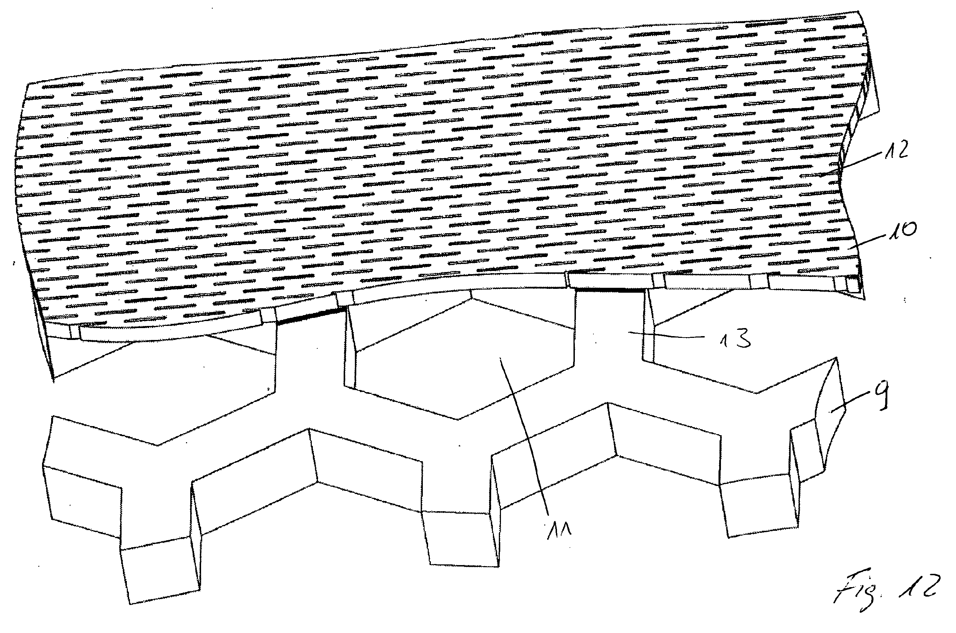

Figur 12 zeigt ein Filtermedium, welches aus einer Schlitzfolie besteht. Bei der Folie handelt es sich beispielsweise um in einem photochemischen Verfahren hergestellte Nickelfolie mit rechteckigen Öffnungen 12. Die Schlitzweite kann 5 µm bis 1000 µm betragen, die Schlitzlänge beispielsweise 10 µm bis 10 mm. Selbstverständlich besteht auch die Möglichkeit, die Schlitzfolie mit kreisförmigen bzw. sechseckigen Öffnungen vorzusehen. Auf Grund des photochemischen Herstellverfahrens sind sämtliche Öffnungsstrukturen denkbar.

Die Folie wird auf einem Trägermedium flächig aufgelötet. Das Lochblech weist idealer Weise sechseckige Löcher 11 auf, um möglichst viel offene Fläche bei gleichmäßiger Abstützung der Folie zu ermöglichen. Der Verbund kann nach dem Löten gerundet werden, um zylindrische Filterelement herzustellen. Die Folie kann sowohl auf der Außen- als auch auf der Innenseite liegen. Das Lochblech kann lochfreie Ränder aufweisen, um es an den Kanten zu verschweißen, es einzuleimen oder auf einen Träger aufzuschrauben.

Es besteht auch die Möglichkeit, das Filtermedium, d. h. die Schlitzfolie mit dem Trägermedium durch Kleben zu verbinden. Hierzu eignen sich bevorzugt hochfeste temperaturbeständige Kleber auf Epoxidharzbasis. Das Aufbringen des Klebers erfolgt beispielsweise unter Zuhilfenahme einer Schablone z. B. aus Teflon, die ein Negativmuster zum Lochblech aufweist und von der Gegenseite, d. h. von der Seite, welche nicht von der Schlitzfolie abgedeckt wird, die Löcher des Lochbleches verschließt. Damit werden diese Löcher durch Teflon ausgefüllt und können nicht mehr verkleben.

## Patentansprüche

1. Mehrlagiges Filterelement mit
- einem an einem Trägermedium (2;3;4;7) gehaltenen Filtermedium (1;5;6;8) , **dadurch gekennzeichnet, dass**
- das Filtermedium ein metallisches Vlies (1), Gewebe (5) oder eine Schlitzfolie (6) ist und das Trägermedium ein metallisches Gewebe (4), Streckmetall (3) oder Lochblech (2) ist.

2. Mehrlagiges Filterelement nach Anspruch 1, , **dadurch gekennzeichnet, dass**
- als Filtermedium ein Edelstahlvlies (1) oder ein Edelstahlgewebe (5) auf einem Lochblech (2) aufgelötet, aufgeschweißt oder geklebt ist.

3. Mehrlagiges Filterelement nach Anspruch 1, , **dadurch gekennzeichnet, dass**
- als Filtermedium ein Edelstahlvlies (1) oder ein Edelstahlgewebe (5) auf einem Edelstahllochblech (2) gesintert oder ein Edelstahlvlies (1) als Filtermedium mit einem Edelstahlgewebe (4) oder Streckmetall (3) als Trägermedium gesintert ist.

4. Mehrlagiges Filterelement nach Anspruch 1, **dadurch gekennzeichnet, dass**
- als Filtermedium eine Nickelschlitzfolie (6) auf einer Nickelschlitzfolie oder einem Nickelgewebe (4) als Trägermedium gesintert ist.

5. Mehrlagiges Filterelement nach Anspruch 1 oder 2, **dadurch gekennzeichnet, dass**
- das Filtermedium (1;5;6;8) mit dem Trägermedium (3;4;7) linien- oder punktweise verbunden ist.

6. Mehrlagiges Filterelement mit
- einer an einem Trägermedium (2;4) gehaltenen Filtermedium (8), **dadurch gekennzeichnet, dass**
- das Filtermedium ein Kunststoffsinterpulver (8) ist und das Trägermedium ein metallisches Gewebe (4) oder Lochblech (2) ist.

7. Mehrlagiges Filterelement nach Anspruch 6, , **dadurch gekennzeichnet, dass**
- das Kunststoffsinterpulver (8) als Filtermedium auf oder um ein Lochblech (2) oder ein Gewebe (4) als Trägermedium gesintert ist.

8. Mehrlagiges Filterelement mit
- einer an einem Trägermedium gehaltenen Filtermedium, **dadurch gekennzeichnet, dass**
- das Filtermedium aus Keramikmembranen besteht, die auf einen Keramiksinterkörper aufgesintert sind.

9. Mehrlagiges Filterelement nach Anspruch 1, **dadurch gekennzeichnet, dass**
als Filtermedium eine Schlitzfolie insbesondere aus Nickel vorgesehen ist, welche auf einem Lochblech, insbesondere aus Edelstahl flächig befestigt ist.

10. Mehrlagiges Filterelement nach Anspruch 9, **dadurch gekennzeichnet, dass**
die Schlitzfolie mit Hartlot auf dem Trägermedium flächig aufgelötet ist.

11. Mehrlagiges Filterelement nach Anspruch 9, **dadurch gekennzeichnet, dass**,
die Schlitzfolie auf dem Trägermedium flächig aufgeklebt ist.

12. Mehrlagiges Filterelement nach Anspruch 9, **dadurch gekennzeichnet, dass**
die Schlitzfolie eine in einem photochemischen Verfahren hergestellte Nickelfolie mit rechteckigen Öffnungen ist.
